# EUROPÄISCHE PATENTSCHRIFT

(11) **EP 2 603 549 B1**
(45) Veröffentlichungstag und Bekanntmachung des Hinweises auf die Patenterteilung: **21.12.2016**
(21) Anmeldenummer: 11745526.1
(22) Anmeldetag: 12.08.2011
(51) Int. Cl.: C08J 9/00, C08J 9/14, C08J 9/16, C08J 9/228

(54) **EXPANDIERBARE GRANULATE AUF POLYESTERBASIS**
POLYESTER-BASED EXPANDABLE BEADS
GRANULÉS EXPANSIBLES À BASE DE POLYESTER

(30) Priorität: 13.08.2010 EP 10172723
(43) Veröffentlichungstag der Anmeldung: 19.06.2013
(73) Patentinhaber: BASF SE, 67056 Ludwigshafen am Rhein (DE)
(72) Erfinder: SAMPATH, Bangaru Dharmapuri Sriramulu, 67063 Ludwigshafen (DE); KRIHA, Olaf, 67227 Frankenthal (DE); RUCKDÄSCHEL, Holger, 67487 St. Martin (DE); DESBOIS, Philippe, 68535 Edingen-Neckarhausen (DE); GRUBER, Freddy, 76877 Offenbach (DE); HAHN, Klaus, 67281 Kirchheim (DE)
(86) Internationale Anmeldenummer: PCT/EP2011/063900
(87) Internationale Veröffentlichungsnummer: WO 2012/020112

(56) Entgegenhaltungen:
- WO-A1-2011/063806
- WO-A2-2011/086030
- DE-A1- 19 938 008
- US-B1- 6 214 897
- DATABASE WPI Week 200227 Thomson Scientific, London, GB; AN 2002-210964 XP002661384, & JP 2001 329103 A (SEKISUI PLASTICS CO LTD) 27. November 2001 (2001-11-27)

## Beschreibung

Die Erfindung betrifft ein Verfahren zur Herstellung eines expandierbaren Granulats auf Polyesterbasis, ein expandierbares Granulat, daraus erhältliche Partikelschäume und Schaumformteile, Verfahren zu deren Herstellung sowie deren Verwendung als Struktur- und/oder Isolierschaum.

Schäume auf Polyesterbasis haben aufgrund von verarbeitungstechnischen Problemen und üblicherweise hohen Dichten im Vergleich zu Polystyrol- oder Polyurethanschäumen eine vergleichsweise geringe Anwendungsbreite.

Polyesterschäume mit geringer Dichte sind beispielsweise aus US-A 4,022,719 bekannt. Extrusionsschaumplatten auf Basis einer Mischung aus Polycarbonat und Polyethylenterephthalat sind in der US-A 5,256,702 beschrieben.

In der US 5,158,985 sind Polycarbonatschäume offenbart, die durch Entspannen eines unter Druck mit CO₂ beaufschlagten Granulats geschäumt wurden.

Trotz dieser Fortschritte besteht weiterhin ein hoher Bedarf an expandierbaren Polyestergranulaten und Polyesterschäumen, die neben einer geringen Dichte eine einfache Verarbeitbarkeit aufweisen. Partikelschaumstoffe zeichnen sich hierbei durch hohe Freiheitsgrade in der Formgebung der Schaumstoffteile aus und sind sehr ressourcenschonend einzusetzen, da die Dichte des Schaumstoffes und damit der Rohstoffbedarf und die Schaumeigenschaften beim Vorschäumen eingestellt werden können. Diese Schaumpartikel können dann zu Blöcken oder komplexen Formteilen in einem Arbeitsschritt verschäumt werden.

Es wurde gefunden, dass sich durch Verwendung eines Polyesters, bei dem Kristallinität, Glasübergangs- und Schmelztemperatur in einem bestimmten Bereich liegen, ein expandierbares Polyestergranulat erhalten lässt, das in einfacher Weise mit Wasserdampf zu Schäumen geringer Dichte expandiert werden kann.

Gegenstand der Erfindung ist daher ein Verfahren zur Herstellung eines expandierbaren Granulats, enthaltend
A) eine Polymermatrix bestehend aus
   A1) mindestens 55 Gew.-% Polyester (bezogen auf die Summe der Komponenten A1) und A2)) mit einer Gesamtschmelzenthalpie von 1 bis zu 37,5 J/g, gegebenenfalls einer oder mehreren Schmelztemperaturen im Bereich von 130 bis 290°C und einer oder mehreren Glasübergangstemperaturen im Bereich von 25 bis 170 °C, wobei die Komponente A1 eine Mischung ist aus einem oder mehreren Polycarbonaten gewählt aus Bisphenol-A-polycarbonat (PC) und Polypropylencarbonat (PPC), und einem oder mehreren Polycarbonsäureestern, gewählt aus Polyethylenterephthalat (PET), Polypropylenterephthalat (PPT), Polybutylenterephthalat (PBT) und Copolyestern davon, und/oder Umesterungsprodukte dieser Mischung, und
   A2) 0 bis 45 Gew.-% (bezogen auf die Summe der Komponenten A1) und A2)) an einem oder mehreren von der Komponente A1) unterschiedlichen thermoplastischen Polymeren;
B) eine physikalische Treibmittelkomponente und
C) gegebenenfalls weitere Additive,
enthaltend die Schritte
a) Bereitstellen des Polyesters A1) oder dessen Vorstufen und gegebenenfalls der Polymerkomponente A2) in geschmolzenem Zustand,
b) Einmischen der physikalischen Treibmittelkomponente B) und gegebenenfalls von einem oder mehreren Additiven C) in die Schmelze,
c) Extrusion und
d) Granulieren der treibmittelhaltigen Schmelze unter Wasser unter erhöhtem Druck von 1 bis 20 bar.

Weitere Gegenstände der Erfindung sind ein Polyester-Partikelschaum, erhältlich durch Vorschäumen des erfindungsgemäßen Granulats, sowie Schaumformteile, erhältlich durch Expansion und Verpressen des Polyester-Partikelschaums.

Weiterhin Gegenstand der Erfindung ist die Verwendung des erfindungsgemäßen Polyester-Partikelschaums in der Automobilindustrie, Luftfahrtindustrie, Bauindustrie, Verpackungsindustrie, im Transportwesen, im Leichtbau und/oder im Verbundbau.

Die erfindungsgemäßen Schaumstoffe bieten zahlreiche Vorteile:
- Es können Schaumstoffe im Dichtebereich von 300 g/L bis 10 g/L hergestellt werden.
- Es lassen sich Schaumstoffteile mit sehr glatten Oberflächen und homogener Verschweißung der Schaumperlen im Formteil herstellen.
- Es wird eine hohe Temperaturbeständigkeit erzielt. Die Schaumstoffteile können mindestens 6 h bei 120 °C gelagert werden, ohne dass ein Temperaturschrumpf zu beobachten ist. Dies ist weder mit EPS noch mit EPP-Schaumstoffen erreichbar.

Durch die Verarbeitbarkeit des Rohstoffs auf handelsüblichen Vorschäumern (für EPS) und die Weiterverarbeitbarkeit der so erhaltenen vorgeschäumten Schaumperlen zu Formteilen auf handelsüblichen Maschinen (für EPP) handelt es sich hierbei um eine Drop-in-Lösung. Die so erhaltenen Schaumstoffe übertreffen die Temperaturbeständigkeit von EPS und sogar EPP deutlich. Diese Eigenschaften ermöglichen neuartige Anwendungen, insbesondere in Bereichen, die höhere Anwendungstemperaturen erfordern, zur Isolierung oder auch als tragende Bauteile.

Die Partikelschaumstoffe sind durch ihre bessere Transporteffizienz umweltfreundlicher als kommerzielle Extrusionsschaumstoffe. Außerdem können Partikelschaumstoffe in einem Arbeitsschritt zu komplexen Bauteilen verarbeitet werden. Bei Extrusionsschaumstoffen sind oft mechanische Bearbeitungen notwendig, bei denen Verschnitt anfällt. Weiterhin zeichnen sich Partikelschaumstoffe durch isotrope mechanische Eigenschaften aus.

Das erfindungsgemäße Granulat enthält einen Polyester A1) mit einer Kristallinität bis zu 40 %, einer Glasübergangstemperatur im Bereich von 0 bis 250 °C und gegebenenfalls einer Schmelztemperatur im Bereich von 100 bis 300 °C.

Der Begriff "Polyester" bezeichnet erfindungsgemäß thermoplastische Kunststoffe, deren Wiederholeinheiten durch eine Estergruppe gekennzeichnet sind. Der Begriff umfasst sowohl Homopolymere, d.h. Polyester, die aus einer Säure- und einer Alkoholkomponente, einer Hydroxycarbonsäurekomponente oder einer Lactonkomponente aufgebaut sind, als auch Copolymere, d.h. Polyester, die aus mindestens zwei Säure- und/oder Alkoholkomponenten und/oder Hydroxycarbonsäurekomponenten und/oder Lactonkomponenten aufgebaut sind. Polyester im Sinne der Erfindung sind neben klassischen Polyestern, d.h. Polycarbonsäureestern, auch Polycarbonate, d.h. Polykohlensäureester, sowie Mischformen wie Polyester- und Polyethercarbonate.

Bei dem Polyester A1) der Erfindung handelt es sich um ein Homo- oder Copolyester oder eine Mischung aus mehreren Homo- und/oder Copolyestern, vorausgesetzt, dass die Mischung den genannten Bedingungen hinsichtlich Schmelzenthalpie, Glasübergangs- und gegebenenfalls Schmelztemperatur genügt.

Eine Gesamtschmelzenthalpie > 0 J/g bedeutet, dass der entsprechende erfindungsgemäße Polyester teilweise kristalline Domänen enthält, die - im Bereich dieser kristallinen Domänen - sowohl einen Glasübergangspunkt als auch einen Schmelzpunkt aufweisen. "Gesamtschmelzenthalpie" bedeutet, dass die kristallinen Domänen teilkristalliner Polyester unterschiedliche Schmelzenthalpien aufweisen können, wobei die Summe dieser Schmelzenthalpien, d.h. die Gesamtschmelzenthalpie, jedoch ≤ 60 J/g ist. Die maximale Gesamtschmelzenthalpie entspricht im Fall von Polybutylenterephthalat (PBT) ungefähr einer Teilkristallinität von 40 %. Die erfindungsgemäße Polyesterkomponente A1) kann auch amorph sein, d.h. eine Schmelzenthalpie von 0 J/g haben. In diesem Fall besitzt die Komponente A1) keine Schmelztemperatur. Der Ausdruck "gegebenenfalls eine Schmelztemperatur im Bereich von 100 bis 300 °C" bedeutet daher, dass die Komponente A1), falls sie nicht amorph ist, in ihren kristallinen Domänen eine entsprechende Schmelztemperatur aufweist. Ein oder mehrere Schmelzpunkte bedeutet, dass wegen einer möglichen unterschiedlichen Zusammensetzung von Domänen auch unterschiedliche Schmelzpunkte auftreten können, die aber alle in dem genannten Bereich liegen. Analoges gilt für die Glasübergangstemperaturen.

Die Gesamtschmelzenthalpie liegt im Bereich von 1 bis 37,5 J/g, bevorzugt von 4,5 bis 30 J/g.

Die Schmelztemperatur(en) liegen bei teilkristallinen Polymeren im Bereich von 130 bis 290 °C, bevorzugt von 150 bis 280 °C.

Die Glasübergangstemperatur(en) liegen im Bereich von 25 bis 170 °C, besonders bevorzugt von 50 bis 150 °C.

Geeignet sind daher Polyester A1) mit einer Gesamtschmelzenthalpie im Bereich von 1,5 bis 37,5 J/g, Schmelztemperaturen im Bereich von 130 bis 290 °C und Glasübergangstemperaturen im Bereich von 25 bis 170 °C.

Bevorzugt sind Polyester A1) mit einer Gesamtschmelzenthalpie im Bereich von 4,5 bis 30 J/g, Schmelztemperaturen im Bereich von 130 bis 250 °C und Glasübergangstemperaturen im Bereich von 50 bis 150 °C.

Weiterhin bevorzugt sind Polyester A1) mit einer Gesamtschmelzenthalpie im Bereich von 4,5 bis 30 J/g, Schmelztemperaturen im Bereich von 150 bis 280 °C und Glasübergangstemperaturen im Bereich von 25 bis 170 °C.

Weiterhin bevorzugt sind Polyester A1) mit einer Gesamtschmelzenthalpie im Bereich von 4,5 bis 30 J/g, Schmelztemperaturen im Bereich von 130 bis 290 °C und Glasübergangstemperaturen im Bereich von 50 bis 150 °C.

Weiterhin bevorzugt sind Polyester A1) mit einer Gesamtschmelzenthalpie im Bereich von 4,5 bis 30 J/g, Schmelztemperaturen im Bereich von 130 bis 290 °C und Glasübergangstemperaturen im Bereich von 25 bis 170 °C.

Weiterhin bevorzugt sind Polyester A1) mit einer Gesamtschmelzenthalpie im Bereich von 1,5 bis 37,5 J/g, Schmelztemperaturen im Bereich von 150 bis 280 °C und Glasübergangstemperaturen im Bereich von 50 bis 150 °C.

Weiterhin besonders bevorzugt sind Polyester A1) mit einer Gesamtschmelzenthalpie im Bereich von 1,5 bis 37,5 J/g, Schmelztemperaturen im Bereich von 150 bis 280 °C und Glasübergangstemperaturen im Bereich von 25 bis 170 °C.

Weiterhin bevorzugt sind Polyester A) mit einer Gesamtschmelzenthalpie im Bereich von 1,5 bis 37,5 J/g, gegebenenfalls Schmelztemperaturen im Bereich von 150 bis 280 °C und Glasübergangstemperaturen im Bereich von 25 bis 170 °C.

Weiterhin bevorzugt sind Polyester A1) mit einer Gesamtschmelzenthalpie im Bereich von 1,5 bis 37,5 J/g, Schmelztemperaturen im Bereich von 150 bis 280 °C und Glasübergangstemperaturen im Bereich von 50 bis 150 °C.

Die Gesamtschmelzenthalpie wird erfindungsgemäß mit Hilfe der Dynamischen Differenzkalorimetrie (DSC, differential scanning calorimetry) nach ISO 11357-7 mit Heiz- und Kühlraten von 20 K/min bestimmt.

Die Schmelztemperatur wird erfindungsgemäß nach ISO 11357-3 mit Heiz- und Kühlraten von 20 K/min bestimmt.

Die Glasübergangstemperatur wird erfindungsgemäß nach ISO 11357-2 mit Heiz- und Kühlraten von 20 K/min bestimmt.

Als Polyester A1) können bekannte, teilweise kommerziell erhältliche Homo- und/oder Copolyestertypen eingesetzt werden, die das geforderte Eigenschaftsprofil aufweisen.

Weiterhin ist es möglich, durch eine entsprechende Mischung verschiedener monomerer Säure- und/oder verschiedener Alkoholkomponenten in Verbindung mit dem erfindungsgemäßen Verfahren Copolyester herzustellen, die das geforderte Eigenschaftsprofil aufweisen. Dazu können beispielsweise Säure- und Alkoholmonomere (oder Lactone und Hydroxysäuren), die als Homopolyester eine zu hohe Kristallinität aufweisen, wie PBT, mit anderen monomeren Komponenten, die als Homopolyester amorphe oder kaum kristalline Strukturen bilden, wie Polycarbonat, gemischt und zu einem erfindungsgemäßen Copolyester umgesetzt werden.

Als Polyester A1) eignen sich auch verschiedene Copolyester basierend auf mehr als zwei Monomeren wie AB/X, AB/X/Y, X/Y/Z, A₁B₁/A₂B₂, A₁B₁/A₂B₂/A₃B₃, A₁B₁/A₂B₂/X, mit
A, A₁, A₂, A₃ = gleich oder verschieden C₂-C₁₈-Dialkohole,
B, B₁, B₂, B₃ = gleich oder verschieden C₂-C₁₈-Disäure und
X, Y, und Z = gleich oder verschieden C₄-C₁₄-Lacton oder C₄-C₁₄-Hydroxycarbonsäure.

In einer weiteren, bevorzugten Variante ist das erfindungsgemäß eingesetzte Polyester A1) ein Copolyester und wird durch Umesterung entsprechender Polyester hergestellt. Dazu eignen sich alle bekannten Umesterungsmethoden, wie sie zum Beispiel in Kunststoff Handbuch [L.A. Utracki, Polymer Blends Handbook, Volume 1, Kluwer Academic Publishers] beschrieben sind.

Besonders bevorzugt ist ein reaktives Mischen (Blenden) der jeweiligen Polyester, insbesondere unmittelbar vor der Schmelzimprägnierung mit der Treibmittelkomponente.

Geeignet für diese Variante sind insbesondere Mischungen aus verschiedenen teilkristallinen oder aus teilkristallinen und amorphen Polyestern, die durch Umesterung in der Schmelze zu den erfindungsgemäß eingesetzten (Co)polyestern A1) umgesetzt werden.

Polyester A1) auf Basis von Polyethylenterephthalat, Polypropylenterephthalat und Polybutylenterephthalat oder deren Mischungen werden verwendet.

Derartige Polyalkylenterephthalate sind an sich bekannt und in der Literatur beschrieben. Sie enthalten einen aromatischen Ring in der Hauptkette, der von der aromatischen Dicarbonsäure stammt. Der aromatische Ring kann auch substituiert sein, z. B. durch Halogen wie Chlor und Brom oder durch C₁-C₄-Alkylgruppen wie Methyl-, Ethyl-, i-bzw. n-Propyl- und n-, i- bzw. t-Butylgruppen.

Diese Polyalkylenterephthalate können durch Umsetzung von aromatischen Dicarbonsäuren, deren Estern oder anderen esterbildenden Derivaten mit aliphatischen Dihydroxyverbindungen in an sich bekannter Weise hergestellt werden.

Als Dicarbonsäure ist Terephthalsäure zu nennen.
Von den aliphatischen Dihydroxyverbindungen werden 1,2-Ethandiol, 1,3-Propandiol und 1,4-Butandiol oder deren Mischungen eingesetzt.

Als Polyester (A1) sind Polyethylenterephthalat, Polypropylenterephthalat und Polybutylenterephthalat oder deren Mischungen zu nennen. Weiterhin bevorzugt sind PET und/oder PBT, welche bis zu 1 Gew. -%, vorzugsweise bis zu 0,75 Gew.-% 1, 6-Hexandiol und/oder 2-Methyl-1,5-pentandiol als weitere Monomereinheiten enthalten.

Die Viskositätszahl der Polyester (A1) liegt im Allgemeinen im Bereich von 50 bis 220, vorzugsweise von 80 bis 160 (gemessen in einer 0,5 gew.-%igen Lösung in einem Phenol/o-Dichlorbenzolgemisch (Gew.-Verh. 1 : 1 bei 25 °C) gemäß ISO 1628.

Bevorzugt sind auch Polyester, deren Carboxylendgruppengehalt bis zu 100/kg, bevorzugt bis zu 50 mÄquivalente/kg und insbesondere bis zu 40 mÄquivalente/kg Polyester beträgt. Derartige Polyester können beispielsweise nach dem Verfahren der DE-A 44 01 055 hergestellt werden. Der Carboxylendgruppengehalt wird üblicherweise durch Titrationsverfahren (z.B. Potentiometrie) bestimmt.

Weiterhin ist es vorteilhaft, PET Rezyklate (auch scrap-PET genannt) gegebenenfalls in Mischung mit Polyalkylenterephthalaten wie PBT einzusetzen.

Unter Rezyklaten versteht man im Allgemeinen:
1) sog. Post Industrial Rezyklat: Hierbei handelt es sich um Produktionsabfälle bei der Polykondensation oder bei der Verarbeitung z.B. Angüsse bei der Spritzgussverarbeitung, Anfahrware bei der Spritzgussverarbeitung oder Extrusion oder Randabschnitte von extrudierten Platten oder Folien.
2) Post Consumer Rezyklat: Hierbei handelt es sich um Kunststoffartikel, die nach der Nutzung durch den Endverbraucher gesammelt und aufbereitet werden. Der mengenmäßig bei weitem dominierende Artikel sind blasgeformte PET-Flaschen für Mineralwasser, Softdrinks und Säfte.

Beide Arten von Rezyklat können entweder als Mahlgut oder in Form von Granulat vorliegen. Im letzteren Fall werden die Rohrezyklate nach der Auftrennung und Reinigung in einem Extruder aufgeschmolzen und granuliert. Hierdurch wird meist die Handhabung, die Rieselfähigkeit und die Dosierbarkeit für weitere Verarbeitungsschritte erleichtert.

Sowohl granulierte als auch als Mahlgut vorliegende Rezyklate können zum Einsatz kommen, wobei die maximale Kantenlänge 10 mm, vorzugsweise kleiner 8 mm betragen sollte.

Aufgrund der hydrolytischen Spaltung von Polyestern bei der Verarbeitung (durch Feuchtigkeitsspuren) empfiehlt es sich, das Rezyklat vorzutrocknen. Der Restfeuchtegehalt nach der Trocknung beträgt vorzugsweise < 0,2 %, insbesondere < 0,05 %.

Als Polyester sollen erfindungsgemäss auch Polycarbonate verstanden werden. Ein geeignetes Polycarbonat ist beispielsweise 2,2-Bis-(4-hydroxyphenyl)-propan..

Sowohl Homopolycarbonate als auch Copolycarbonate sind als Komponente A1 geeignet, bevorzugt sind neben dem Bisphenol A-Homopolymerisat die Copolycarbonate von Bisphenol A.

Die geeigneten Polycarbonate können in bekannter Weise verzweigt sein, und zwar vorzugsweise durch den Einbau von 0,05 bis 2,0 Mol-%, bezogen auf die Summe der eingesetzten Diphenole, an mindestens trifunktionellen Verbindungen, beispielsweise solchen mit drei oder mehr als drei phenolischen OH-Gruppen.

Als besonders geeignet haben sich Polycarbonate erwiesen, die relative Viskositäten ήᵣₑₗ von 1,10 bis 1,50, insbesondere von 1,25 bis 1,40 aufweisen. Dies entspricht mittle ren Molekulargewichten Mw (Gewichtsmittelwert) von 10 000 bis 200 000, vorzugsweise von 20 000 bis 80 000 g/mol.

Die Diphenole der allgemeinen Formel sind an sich bekannt oder nach bekannten Verfahren herstellbar.

Die Herstellung der Polycarbonate kann beispielsweise durch Umsetzung der Diphenole mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird. (Bezüglich polydiorganosiloxanhaltigen Polycarbonaten siehe beispielsweise DE-OS 33 34 782).

Geeignete Kettenabbrecher sind beispielsweise Phenol, p-t-Butylphenol aber auch langkettige Alkylphenole wie 4-(1,3-Tetramethylbutyl)-phenol, gemäß DE-OS 28 42 005 oder Monoalkylphenole oder Dialkylphenole mit insgesamt 8 bis 20 C-Atomen in den Alkylsubstituenten gemäß DE-A 35 06 472, wie p-Nonylphenyl, 3,5-di-t-Butylphenol, p-t-Octylphenol, p-Dodecylphenol, 2-(3,5-dimethylheptyl)-phenol und 4-(3,5-Dimethylheptyl)-phenol.

Halogenfreie Polycarbonate im Sinne der vorliegenden Erfindung bedeutet, dass die Polycarbonate aus halogenfreien Diphenolen, halogenfreien Kettenabbrechern und gegebenenfalls halogenfreien Verzweigern aufgebaut sind, wobei der Gehalt an untergeordneten ppm-Mengen an verseifbarem Chlor, resultierend beispielsweise aus der Herstellung der Polycarbonate mit Phosgen nach dem Phasengrenzflächenverfahren, nicht als halogenhaltig im Sinne der Erfindung anzusehen ist. Derartige Polycarbonate mit ppm-Gehalten an verseifbarem Chlor sind halogenfreie Polycarbonate im Sinne der Erfindung.

Ein geeignetes Polycarbonat istweiterhin Polypropylencarbonat.

Als Ausgangsmaterial können Phosgen, Diphosgen, Triphosgen oder organische Carbonate eingesetzt werden, wobei organische Carbonate bevorzugt sind.

Bei den Resten R der als Ausgangsmaterial eingesetzten organischen Carbonate (A1) der allgemeinen Formel RO(CO)ₙOR handelt es sich jeweils unabhängig voneinander um einen geradkettigen oder verzweigten aliphatischen, aromatisch/aliphatisch oder aromatischen Kohlenwasserstoffrest mit 1 bis 20 C-Atomen. Die beiden Reste R können auch unter Bildung eines Ringes miteinander verbunden sein. Bevorzugt handelt es sich um einen aliphatischen Kohlenwasserstoffrest und besonders bevorzugt um einen geradkettigen oder verzweigten Alkylrest mit 1 bis 5 C-Atomen, oder um einen substituierten oder unsubstituierten Phenylrest.

Insbesondere werden einfache Carbonate der Formel RO(CO)ₙOR eingesetzt ; n beträgt vorzugsweise 1 bis 3, insbesondere 1.

Dialkyl- oder Diarylcarbonate können zum Beispiel hergestellt werden aus der Reaktion von aliphatischen, araliphatischen oder aromatischen Alkoholen, vorzugsweise Monoalkoholen mit Phosgen. Weiterhin können sie auch über oxidative Carbonylierung der Alkohole oder Phenole mittels CO in Gegenwart von Edelmetallen, Sauerstoff oder NOx hergestellt werden. Zu Herstellmethoden von Diaryl- oder Dialkylcarbonaten siehe auch "Ullmann's Encyclopedia of Industrial Chemistry", 6th Edition, 2000 Electronic Release, Verlag Wiley-VCH.

Beispiele geeigneter Carbonate umfassen aliphatische, aromatisch/aliphatische oder aromatische Carbonate wie Ethylencarbonat, 1,2- oder 1,3-Propylencarbonat, Diphenylcarbonat, Ditolylcarbonat, Dixylylcarbonat, Dinaphthylcarbonat, Ethylphenylcarbonat, Dibenzylcarbonat, Dimethylcarbonat, Diethylcarbonat, Dipropylcarbonat, Dibutylcarbonat, Diisobutylcarbonat, Dipentylcarbonat, Dihexylcarbonat, Dicyclohexylcarbonat, Diheptylcarbonat, Dioctylcarbonat, Didecylcarbonat oder Didodecylcarbonat.

Beispiele für Carbonate, bei denen n grösser 1 ist, umfassen Dialkyldicarbonate, wie Di(-t-butyl)dicarbonat oder Dialkyltricarbonate wie Di(-t-butyl)tricarbonat.

Bevorzugt werden aliphatische Carbonate eingesetzt, insbesondere solche, bei denen die Reste 1 bis 5 C-Atome umfassen, wie zum Beispiel Dimethylcarbonat, Diethylcarbonat, Dipropylcarbonat, Dibutylcarbonat oder Diisobutylcarbonat.

Komponente A1) ist eine Mischung aus einem oder mehreren Polycarbonaten gewählt aus Bisphenol-A-polycarbonat (PC) und Polypropylencarbonat (PPC), und einem oder mehreren Polycarbonsäureestern, gewählt aus Polyethylenterephthalat (PET), Polypropylenterephthalat (PPT), Polybutylenterephthalat (PBT) und Copolyestern davon, und/oder Umesterungsprodukte dieser Mischung.

Insbesondere bevorzugt sind die Mischungen PC/PET, PC/PPT, PC/PBT, PPC/PET, PPC/PPT, PPC/PBT und Umesterungsprodukte davon.

In einer bevorzugten Ausführungsform besteht die Polymermatrix A) aus der Polyesterkomponente A1), d.h. A2) = 0 %.

Als Komponente A2) enthält das erfindungsgemäße Granulat gegebenenfalls bis zu 45 Gew.-% (bezogen auf die Summe der Komponenten A1) und A2)) an einem oder mehreren von der Komponente A1) unterschiedlichen thermoplastischen Polymeren.

Die Komponente A2) ist vorzugsweise mit der Polyesterkomponente A1) nicht mischbar, so dass es zur Ausbildung von Domänen der Komponenten A1) und A2) kommt. Enthält das erfindungsgemäße Granulat beide Komponenten, können die erfindungsgemäßen Eigenschaften der Polyesterkomponente daher durch Messungen an Domänen der Polyesterkomponente A1) bestimmt werden. Bevorzugt handelt es sich bei der Komponente A2) nicht um Polykondensate.

In einer bevorzugten Ausführungsform enthält das erfindungsgemäße Granulat 0,1 bis 20 Gew.-%, besonders bevorzugt 0,4 bis 15 Gew.-%, insbesondere 1 bis 12 Gew.-% (bezogen auf die Summe der Komponenten A1) und A2)) an einem oder mehreren thermoplastischen Polymeren A2), insbesondere an einem oder mehreren Styrolpolymeren (siehe unten).

In einer weiteren Ausführungsform enthält die Komponente A2) inerte Polymere, die eine höhere Löslichkeit des Treibmittels aufweisen als der Polyester A1) und so als Treibmittelreservoir dienen. Durch den Zusatz einer solchen Komponente A2) können bevorzugt Schäume mit einer niedrigen Dichte, bevorzugt im Bereich um 25 bis 100 g/l, hergestellt werden.

Bevorzugt als Komponente A2) sind Styrolpolymere, Polyacrylate, Polyolefine, Polysulfone, Polyethersulfone, Polyphenylenether und Blends aus zwei oder mehreren dieser Polymere.

Besonders bevorzugt als Komponente A2) sind Styrolpolymere und/oder deren Blends mit Polyphenylenether.

Erfindungsgemäß umfasst der Begriff Styrolpolymer Polymere auf Basis von Styrol, alpha-Methylstyrol oder Mischungen von Styrol und alpha-Methylstyrol; analog gilt dies für den Styrolanteil in SAN, AMSAN, ABS, ASA, MBS und MABS (siehe unten).

Bevorzugt werden als Styrolpolymere glasklares Polystyrol (GPPS), Schlagzähpolystyrol (HIPS), anionisch polymerisiertes Polystyrol oder Schlagzähpolystyrol (A-IPS), Styrol-alpha-Methylstyrolcopolymere, Acrylnitril-Butadien-Styrolpolymerisate (ABS), Styrol-Acrylnitril-Copolymere (SAN), Acrylnitril-alpha-Methylstyrol-Copolymere (AMSAN), Acrylnitril-Styrol-Acrylester (ASA), Methylmethacrylat-Butadien-Styrol (MBS), Methylmethacrylat-Acrylnitril-Butadien-Styrol (MABS)-polymerisate oder Mischungen davon oder mit Polyphenylenether (PPE) eingesetzt.

Es können auch Polymerrezyklate der genannten thermoplastischen Polymere, insbesondere Styrolpolymere und expandierbare Styrolpolymere (EPS) in Mengen zugemischt werden, die deren Eigenschaften nicht wesentlich verschlechtern, in der Regel in Mengen von maximal 50 Gew.-%, insbesondere in Mengen von 1 bis 20 Gew.-% (bezogen auf die Komponente A2)).

Zur Herstellung des erfindungsgemäßen Granulats wird eine Schmelze der Komponenten A1) und gegebenenfalls A2) mit der Treibmittelkomponente B) imprägniert.

Als Treibmittelkomponente B) eignen sich ein oder mehrere physikalische Treibmittel, insbesondere organische, wie aliphatische Kohlenwasserstoffe mit 2 bis 7 Kohlenstoffatomen, Alkohole, Ether, Carbonylverbindungen wie Ketone und halogenierte Kohlenwasserstoffe, und/oder CO₂. Bevorzugt werden iso-Pentan, n-Pentan, neo-Pentan, isoButan, n-Butan, Ethanol und iso-Propanol eingesetzt, besonders bevorzugt iso-Pentan, n-Pentan und neo-Pentan sowie Mischungen von zwei oder mehreren dieser Isomere, z.B. eine Mischung aus n- und iso-Pentan. Bevorzugt sind auch Mischungen aus mindestens zwei physikalischen Treibmitteln. Die treibmittelhaltige Polymerschmelze enthält in der Regel die Treibmittelkomponente in homogener Verteilung in einem Anteil von insgesamt 0,1 bis 10 Gew.-%, bevorzugt 0,5 bis 10 Gew.-%, besonders bevorzugt 2,5 bis 8 Gew.-%, bezogen auf die treibmittelhaltige Polymerschmelze.

Die erfindungsgemäßen Granulate weisen in der Regel eine Schüttdichte von bis zu 900 g/l, bevorzugt im Bereich von 400 bis 800 g/l, besonders bevorzugt im Bereich von 500 bis 700 g/l auf. Bei Verwendung von Füllstoffen können in Abhängigkeit von der Art und Menge des Füllstoffes Schüttdichten im Bereich von größer als 900 g/l auftreten.

Neben der Treibmittelkomponente und Wasser können weitere Additive und Hilfsstoffe zugegeben werden. Bevorzugt sind dabei die gegebenenfalls in der Polymerzusammensetzung bereits enthaltenen Additive und Hilfsstoffe, so kann Talkum als Nukleierungshilfsmittel verwendet werden.

Zur Herstellung des erfindungsgemäßen Granulats und des daraus erhaltenen Partikelschaums wird das Treibmittel direkt in die Polymerschmelze bei erhöhten Drücken eingemischt, und/oder es wird ein bereits mit dem Treibmittel imprägniertes Polymermaterial geschmolzen. Ein mögliches Verfahren umfasst die Stufen a) Schmelzerzeugung, b) Einbringung und Mischen der Treibmittel, c) ggf. Kühlen, d) Fördern, e) Granulieren und f) Expandieren. Jede der Stufen a) bis e) kann durch die in der Kunststoffverarbeitung bekannten Apparate oder Apparatekombinationen ausgeführt werden. Die Polymerschmelze kann direkt aus einem Polymerisationsreaktor entnommen werden oder direkt in dem Mischextruder oder einem separaten Aufschmelzextruder durch Aufschmelzen von Polymergranulaten erzeugt werden. Zur Einmischung der Treibmittel eignen sich statische Mischer oder dynamische Mischer, beispielsweise Extruder. Zur Einstellung der gewünschten Schmelzetemperatur kann gegebenenfalls eine Kühlung der Schmelze vorgenommen werden. Dazu eignen sich die eingesetzten Mischaggregate, separaten Kühler oder Wärmeaustauscher. Die Granulierung erfolgt vorteilhaft durch druckbeaufschlagte Unterwassergranulierung. Damit wird eine Expansion der treibmittelhaltigen Schmelze beim Düsenaustritt vollständig oder zumindest teilweise unterdrückt. Zum Druckaufbau für die Düsen der Granulierung kann das Mischaggregat (Extruder) an sich oder eine zusätzliches, druckaufbauendes Schmelzeaggregat eingesetzt werden. Bevorzugt wird eine Zahnradpumpe eingesetzt. Zur Durchführung des Verfahrens geeignete Apparateanordnungen sind beispielsweise, ohne darauf beschränkt zu sein:
a) Polymerisationsreaktor - statischer Mischer/Kühler - Zahnradpumpe - Granulator
b) Polymerisationsreaktor - Schmelzeextruder - Zahnradpumpe - Granulator
c) Extruder - statischer Mischer - Granulator
d) Extruder - statischer Mischer - Zahnradpumpe - Granulator
e) Extruder - Granulator.
f) Extruder - statischer Mischer - Zahnradpumpe - Granulator
g) Extruder - Zahnradpumpe - statischer Mischer / Wärmetauscher - Zahnradpumpe - Granulator
h) Extruder - statischer Mischer - Zahnradpumpe - statischer Mischer / Wärmetauscher- Zahnradpumpe - Granulator

Weiterhin kann die Anordnung ein oder mehrere Seitenextruder oder Seitenbeschickungen zur Einbringung von weiteren Polymeren und Additiven, z.B. von Feststoffen oder thermisch empfindlichen Zusatzstoffen aufweisen. Zudem können flüssige Additive an jedem Ort des Verfahrens injiziert werden, bevorzugt im Bereich der statischen und dynamischen Mischaggregate.

Die treibmittelhaltige Polymerschmelze wird in der Regel mit einer Temperatur im Bereich von 120 bis 400 °C, bevorzugt 160 bis 350°C, besonders bevorzugt im Bereich von 170 bis 300 °C durch die Düsenplatte gefördert.

Die Düsenplatte wird bevorzugt auf mindestens 10 °C über die Kristallisationstemperatur oder - falls diese höher liegt - die Glasübergangstemperatur der treibmittelhaltigen Polymerschmelze beheizt, um Polymerablagerungen in den Düsen zu verhindern und eine störungsfreie Granulierung zu gewährleisten. Bevorzugt liegt die Temperatur der Düsenplatte im Bereich von 10 bis 200°C, besonders bevorzugt 10 bis 120 °C über der Kristallisationstemperatur der treibmittelhaltigen Polymerschmelze.

Um marktfähige Granulatgrößen zu erhalten, sollte der Durchmesser (D) der Düsenbohrungen am Düsenaustritt im Bereich von 0,2 bis 2,0 mm, bevorzugt im Bereich von 0,3 bis 1,5 mm, besonders bevorzugt im Bereich von 0,3 bis 1,0 mm liegen. Damit lassen sich auch nach Strangaufweitung Granulatgrößen unter 2,5 mm, insbesondere im Bereich 0,4 bis 1,5 mm gezielt einstellen.

Besonders bevorzugt wird ein Verfahren zur Herstellung eines erfindungsgemäßen Granulats, umfassend die Schritte
a) Her- oder Bereitstellen einer Schmelze der Polymerkomponenten A1) und gegebenenfalls A2),
b) Einmischen von mindestens einer Treibmittelkomponente und gegebenenfalls von Additiven, wie Wasser oder Talkum, in die Polymerschmelze mittels statischen oder dynamischen Mischers bei einer Temperatur von mindestens 150°C,
c) thermisches Homogenisieren und ggf. Kühlen der Treibmittel- und Polymerschmelze auf eine Temperatur von mindestens 120°C
d) Austrag durch eine Düsenplatte mit Bohrungen, deren Durchmesser am Düsenaustritt höchstens 1,5 mm beträgt,
e) Granulieren der treibmittelhaltigen Schmelze direkt hinter der Düsenplatte unter Wasser bei einem Druck im Bereich von 1 bis 20 bar und
f) Vorschäumen des erhaltenen Granulats zu einem Partikelschaum.

Schritt (f) des erfindungsgemäßen Verfahrens wird üblicherweise zeitlich getrennt von den Schritten (a) bis (e) beispielsweise bei einem Anwender durchgeführt.

Alternativ kann die Beaufschlagung des oder der Polymere mit Treibmittel auch im nicht geschmolzenen Zustand, beispielsweise unter Druck in einem Autoklaven erfolgen. Dazu werden beispielsweise Polymerpartikel in einem Autoklaven vorgelegt und mit dem physikalischen Treibmittel (z.B. einem organischen Treibmittel wie Pentan), imprägniert bzw. gesättigt. Nach Entspannen des Autoklaven werden die imprägnierten Polymerpartikel zum Vorexpandieren erhitzt.

Gegenstand der Erfindung ist auch ein erfindungsgemäßes expandierbares Granulat, erhältlich durch
a) Her- oder Bereitstellen einer Schmelze der Polymerkomponenten A1) und gegebenenfalls A2)
b) Einmischen der physikalischen Treibmittelkomponente B) und gegebenenfalls von einem oder mehreren Additiven C) in die Schmelze,
c) Extrusion und
d) Granulieren der treibmittelhaltigen Schmelze unter Wasser unter erhöhtem Druck von 1 bis 20 bar.

Die erfindungsgemäßen Granulate können in einem ersten Schritt mittels Heißluft oder Wasserdampf - in so genannten Vorschäumern - durch ein- oder mehrmaliges Vorschäumen zu den erfindungsgemäßen Schaumpartikeln mit einer Dichte im Bereich von 10 bis 300 g/l, insbesondere 20 bis 200 g/l vorgeschäumt und in einem zweiten Schritt in einer geschlossenen Form zu Schaumformteilen (aus Partikelschaum) verschweißt werden. Hierzu werden die vorgeschäumten Partikel in nicht gasdicht schließende Formen gebracht und mit Wasserdampf beaufschlagt (zum Beispiel 1,8 bis 3,2 bar). Nach dem Abkühlen können die Formteile entnommen werden.

Die erfindungsgemäßen Granulate können 0 bis 50, insbesondere bis zu 40, vorzugsweise bis zu 30 Gew.-%, bezogen auf die Polymermatrix, an weiteren Additiven C) enthalten.

Zur Stabilisation des Extrusionsvorgangs kann das erfindungsgemäße Granulat Verbindungen enthalten, die eine Erhöhung des Molekulargewichts bewirken wie Kettenverlängerer und/oder -verzweiger und/oder Vernetzer. Beispiele sind Amine, Carboxylverbindungen, Carbodiimide, Oxazoline, epoxyfunktionalisierte und Maleinsäureanhydridgruppen enthaltende Verbindungen, die als niedermolekulare Verbindungen und/oder funktionalisierte Polymere, beispielsweise auf Styrol- oder Acrylatbasis, eingesetzt werden. Geeignet sind beispielsweise Verbindungen, wie sie unter den Joneryl^{®} ADR Marken von der BASF SE vertrieben werden.

Als Vernetzungsmittel können beispielsweise wasserlösliche Homopolymere auf Basis von Acrylsäure zugesetzt werden, wie sie beispielsweise unter den Sokalan^{®} PA-Marken von der BASF SE erhältlich sind.

Übliche Zusatzstoffe C) sind beispielsweise in Mengen bis zu 40, vorzugsweise bis zu 30 Gew.-% kautschukelastische Polymerisate (oft auch als Schlagzähmodifier, Elastomere oder Kautschuke bezeichnet).

Ganz allgemein handelt es sich dabei um Copolymerisate, die bevorzugt aus mindestens zwei der folgenden Monomeren aufgebaut sind : Ethylen, Propylen, Butadien, Isobuten, Isopren, Chloropren, Vinylacetat, Styrol, Acryinitril und Acryl- bzw. Methacrylsäureester mit 1 bis 18 C-Atomen in der Alkoholkomponente.

Derartige Polymere werden z. B. in Houben-Weyl, Methoden der organischen Chemie, Band 14/1 (Georg-Thieme-Verlag, Stuttgart, 1961), Seiten 392 bis 406 und in der Monographie von C. B. Bucknall,"Toughened Plastics" (Applied Science Publishers, London, 1977) beschrieben.

Im Folgenden werden einige bevorzugte Arten solcher Elastomere vorgestellt.

Bevorzugte Arten von solchen Elastomeren sind die sogenannten Ethylen-Propylen (EPM) bzw. Ethylen-Propylen-Dien-(EPDM)-Kautschuke.

EPM-Kautschuke haben im Allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyltricyclo(5.2.1.0.2.6)-3,8-decadien oder deren Mischungen genannt. Bevorzugt werden Hexa-1,5-dien, 5-Ethylidennorbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien z. B. Acrylsäure, Methacrylsäure und deren Derivate, z. B. Glycidyl(meth)acrylat, sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren wie Maleinsäure und Fumarsäure oder Derivate dieser Säuren, z.B. Ester und Anhydride, und/oder Epoxygruppen enthaltende Monomere enthalten. Diese Dicarbonsäurederivate bzw. Epoxygruppen enthaltende Monomere werden vorzugsweise durch Zugabe von Dicarbonsäure- bzw. Epoxygruppen enthaltenden Monomeren der allgemeinen Formeln (I) oder (II) oder (III) oder (IV) zum Monomerengemisch in den Kautschuk eingebaut

R¹C (COOR²) =C(COOR³)R⁴ (I)

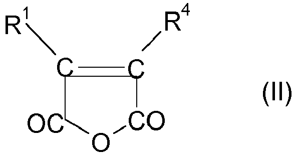

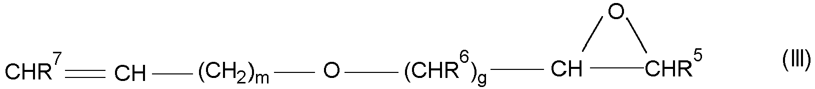

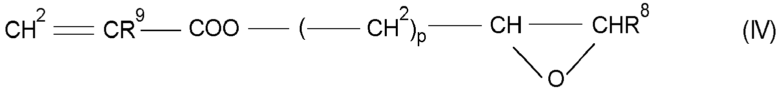

wobei R¹ bis R⁹ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste R¹ bis R⁹ Wasserstoff, wobei m für 0 oder 1 und g für 1 steht. Die entsprechenden Verbindungen sind Maleinsäure, Fumarsäure, Malein säureanhydrid, Allylglycidylether und Vinylglycidylether.

Bevorzugte Verbindungen der Formeln (I), (II) und (IV) sind Maleinsäure, Maleinsäureanhydrid und Epoxygruppen enthaltende Ester der Acrylsäure und/oder Methacrylsäure, wie Glycidylacrylat, Glycidylmethacrylat und die Ester mit tertiären Alkoholen, wie t-Butylacrylat. Letztere weisen zwar keine freien Carboxylgruppen auf, kommen in ihrem Verhalten aber den freien Säuren nahe und werden deshalb als Monomere mit latenten Carboxylgruppen bezeichnet.

Vorteilhaft bestehen die Copolymeren aus 50 bis 98 Gew.-% Ethylen, 0,1 bis 20 Gew.-% Epoxygruppen enthaltenden Monomeren und/oder Methacrylsäure und/oder Säureanhydridgruppen enthaltenden Monomeren sowie der restlichen Menge an (Meth)acrylsäureestern.

Besonders bevorzugt sind Copolymerisate aus
50 bis 98, insbesondere 55 bis 95 Gew.-% Ethylen,
0,1 bis 40, insbesondere 0,3 bis 20 Gew.-% Glycidylacrylat und/oder Glycidylmethacrylat, (Meth)acrylsäure und/oder Maleinsäureanhydrid, und
1 bis 45, insbesondere 10 bis 40 Gew.-% n-Butylacrylat und/oder 2-Ethylhexylacrylat.

Weitere bevorzugte Ester der Acryl-und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymere können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z. B. bei Blackley in der Monographie "Emulsion Polymerization" beschrieben wird. Die verwendbaren Emulgatoren und Katalysatoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymere wird von dieser Zugabereihenfolge beeinflusst.

Nur stellvertretend seien hier als Monomere für die Herstellung des Kautschukteils der Elastomere Acrylate wie z. B. n-Butylacrylat und 2-Ethylhexylacrylat, entsprechende Methacrylate, Butadien und Isopren sowie deren Mischungen genannt. Diese Monomeren können mit weiteren Monomeren wie z. B. Styrol, Acryinitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0 °C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20 °C) am Aufbau des Elastomeren beteiligt, so werden diese im Allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt.

Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z. B. Epoxy-, Carboxyl-, latente Carboxyl-, Amino- oder Amidgruppen sowie funktionelle Gruppen, die durch Mitverwendung von Monomeren der allgemeinen Formel 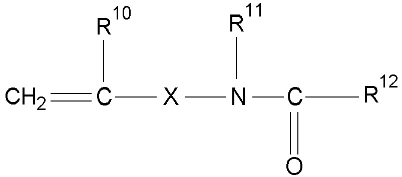 eingeführt werden können,
wobei die Substituenten folgende Bedeutung haben können:
- R¹⁰: Wasserstoff oder eine C₁-C₄-Alkylgruppe,
- R¹¹: Wasserstoff, eine C₁-C₈-Alkylgruppe oder eine Arylgruppe, insbesondere Phenyl,
- R¹²: Wasserstoff, eine C₁-C₁₀-Alkyl-, eine C₆-C₁₂-Arylgruppe oder -OR¹³
- R¹³: eine C₁-C₈-Alkyl-oder C₆-C₁₂-Arylgruppe, die gegebenenfalls mit O-oder N-haltigen Gruppen substituiert sein können,
- X: eine chemische Bindung, eine C₁-C₁₀-Alkylen- oder C₆-C₁₂-Arylengruppe oder

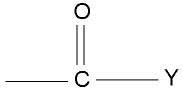

- Y: O-Z oder NH-Z und
- Z: eine C₁-C₁₀-Alkylen-oder C₆-C₁₂-Arylengruppe.

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)-ethylmethacrylat, (N,N-Dimethylamino)ethylacrylat, (N,N-Dimethylamino)methylacrylat und (N,N-Diethyl-amino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 0 050 265 beschriebenen Verbindungen.

Ferner können auch sogenannte pfropfvernetzende Monomere (graft-linking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allyacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomere; für nähere Einzelheiten sei hier beispielsweise auf die US-PS 4,148,846 verwiesen.

Im Allgemeinen beträgt der Anteil dieser vernetzenden Monomeren an dem schlagzäh modifizierenden Polymer bis zu 5 Gew.-%, vorzugsweise nicht mehr als 3 Gew.-%, bezogen auf das schlagzäh modifizierende Polymer.

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Typ | Monomere für den Kern | Monomere für die Hülle |
|---|---|---|
| I | Buta-1,3-dien, Isopren, n-Butylacrylat, Ethylhexylacrylat oder deren Mischungen | Styrol, Acrylnitril, Methylmethacrylat |
| II | wie I, aber unter Mitverwendung von Vernetzern | wie I |
| III | wie I oder II | n-Butylacrylat, Ethylacrylat, Methylacrylat, Buta-1,3-dien, Isopren, Ethylhexylacrylat |
| IV | wie I oder II | wie I oder III, aber unter Mitverwendung von Monomeren mit reaktiven Gruppen wie hierin beschrieben |
| V | Styrol, Acrylnitril, Methylmethacrylat oder deren Mischungen | erste Hülle aus Monomeren wie unter I und II für den Kern beschrieben, zweite Hülle wie unter I oder IV für die Hülle beschrieben |

Diese Pfropfpolymerisate, insbesondere ABS-und/oder ASA-Polymere in Mengen bis zu 40 Gew.-%, werden vorzugsweise zur Schlagzähmodifizierung von PBT, gegebenenfalls in Mischung mit bis zu 40 Gew.-% Polyethylenterephthalat eingesetzt. Entsprechende Blend-Produkte sind unter dem Warenzeichen UltradurOS (ehemals Ultrablend^{®}S der BASF AG) erhältlich.

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere, Pfropfpolymerisate mit einem inneren Kern aus n-Butylacrylat oder auf Butadienbasis und einer äußeren Hülle aus den vorstehend genannten Copolymeren und Copolymere von Ethylen mit Comonomeren, die reaktive Gruppen liefern.

Die beschriebenen Elastomere können auch nach anderen üblichen Verfahren, z. B. durch Suspensionspolymerisation, hergestellt werden.

Silikonkautschuke, wie in der DE-A 37 25 576, der EP-A 235 690, der DE-A 38 00 603 und der EP-A 319 290 beschrieben, sind ebenfalls bevorzugt.

Selbstverständlich können auch Mischungen der vorstehend aufgeführten Kautschuktypen eingesetzt werden.

Als faser- oder teilchenförmige Füllstoffe C) seien Kohlenstofffasern, Glasfasern, Glaskugeln, amorphe Kieselsäure, Asbest, Calciumsilikat, Calciummetasilikat, Magnesiumcarbonat, Kaolin, Kreide, gepulverter Quarz, Glimmer, Bariumsulfat und Feldspat genannt, die in Mengen bis zu 50 Gew. -%, insbesondere bis zu 40 Gew.-% eingesetzt werden.

Als bevorzugte faserförmige Füllstoffe seien Kohlenstofffasern, Aramidfasern und Kaliumtitanatfasern genannt, wobei Glasfasern als E-Glas besonders bevorzugt sind. Diese können als Rovings oder Schnittglas in den handelsüblichen Formen eingesetzt werden.

Die faserförmigen Füllstoffe können zur besseren Verträglichkeit mit dem Thermoplasten mit einer Silanverbindung oberflächlich vorbehandelt sein.

Geeignete Silanverbindungen sind solche der allgemeinen Formel

(X-(CH₂)ₙ)ₖ-Si-(O-CₘH₂ₘ₊₁)₄₋ₖ,

in der die Substituenten folgende Bedeutung haben :

X NH₂-,

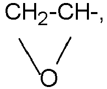

HO-,

- n: eine ganze Zahl von 2 bis 10, bevorzugt 3 bis 4
- m: eine ganze Zahl von 1 bis 5, bevorzugt 1 bis 2
- k: eine ganze Zahl von 1 bis 3, bevorzugt 1.

Bevorzugte Silanverbindungen sind Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Die Silanverbindungen werden im Allgemeinen in Mengen von 0,05 bis 5, vorzugsweise 0,5 bis 1,5 und insbesondere 0,8 bis 1 Gew. -% (bezogen auf C) zur Oberflächenbeschichtung eingesetzt.

Geeignet sind auch nadelförmige mineralische Füllstoffe.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D-(Länge Durchmesser)-Verhältnis von 8 : 1 bis 35 : 1, bevorzugt von 8 : 1 bis 11 : 1 auf.

Der mineralische Füllstoff kann gegebenenfalls mit den vorstehend genannten Silanverbindungen vorbehandelt sein; die Vorbehandlung ist jedoch nicht unbedingt erforderlich.

Als weitere Füllstoffe seien Kaolin, calciniertes Kaolin, Wollastonit, Talkum und Kreide genannt.

Als Komponente C) können die erfindungsgemässen thermoplastischen Formmassen übliche Verarbeitungshilfsmittel wie Stabilisatoren, Oxidationsverzögerer, Mittel gegen Wärmezersetzung und Zersetzung durch ultraviolettes Licht, Gleit-und Entformungsmittel, Färbemittel wie Farbstoffe und Pigmente, Keimbildungsmittel, Weichmacher usw. enthalten.

Als Beispiele für Oxidationsverzögerer und Wärmestabilisatoren sind sterisch gehindere Phenole und/oder Phosphite, Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im Allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische Pigmente, wie Titandioxid, Ultramarinblau, Eisenoxid und Ruß, weiterhin organische Pigmente, wie Phthalocyanine, Chinacridone, Perylene sowie Farbstoffe, wie Nigrosin und Anthrachinone als Farbmittel zugesetzt werden.

Als Keimbildungsmittel können Natriumphenylphosphinat, Aluminiumoxid, Siliziumdioxid sowie bevorzugt Talkum eingesetzt werden.

Weitere Gleit-und Entformungsmittel werden üblicherweise in Mengen bis zu 1 Gew.-% eingesetzt. Es sind bevorzugt langkettige Fettsäuren (z.B. Stearinsäure oder Behensäure), deren Salze (z.B. Ca- oder Zn-Stearat) oder Montanwachse (Mischungen aus geradkettigen, gesättigten Carbonsäuren mit Kettenlängen von 28 bis 32 C-Atomen) sowie Ca- oder Na-Montanat sowie niedermolekulare Polyethylen- bzw. Polypropylenwachse.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid genannt.

Die erfindungsgemässen Formmassen können noch 0 bis 2 Gew.-% fluorhaltige Ethylenpolymerisate enthalten. Hierbei handelt es sich um Polymerisate des Ethylens mit einem Fluorgehalt von 55 bis 76 Gew. -%, vorzugsweise 70 bis 76 Gew.-%.

Beispiele hierfür sind Polytetrafluorethylen (PTFE), Tetrafluorethylenhexafluorpropylen-Copolymere oder Tetrafluorethylen-Copolymerisate mit kleineren Anteilen (in der Regel bis zu 50 Gew.-%) copolymerisierbarer ethylenisch ungesättigter Monomere. Diese werden z.B. von Schildknecht in "Vinyl and Related Polymers", Wiley-Verlag, 1952, Seiten 484 bis 494 und von Wall in "Fluorpolymers" (Wiley Interscience, 1972) beschrieben.

Diese fluorhaltigen Ethylenpolymerisate liegen homogen verteilt in den Granulaten vor und weisen bevorzugt eine Teilchengröße d50 (Zahlenmittelwert) im Bereich von 0,05 bis 10 µm, insbesondere von 0,1 bis 5 µm auf. Diese geringen Teilchengrößen lassen sich besonders bevorzugt durch Verwendung von wässrigen Dispersionen von fluorhaltigen Ethylenpolymerisaten und deren Einarbeitung in eine Polyesterschmelze erzielen.

Erfindungsgemäße Granulate zeigen sehr gute Lagerbeständigkeit: Der Rohstoff lässt sich auch nach mehr als 8 Monaten noch zu ähnlich niedrigen Dichten verschäumen wie direkt nach der Herstellung des expandierbaren Polymergranulates (Rohstoff).

Die erhaltenen Schaumstoffe zeichnen sich durch ein besonderes und für Partikelschäume neuartiges Eigenschaftsprofil aus:
- hohe Lösungsmittelbeständigkeit
- gute Haftung und Beständigkeit mit Klebstoffen und Harzen, beispielsweise Epoxy-Systeme
- gute Metallhaftung
- Lackierbarkeit
- hohen Oberflächenglanz
- Energieabsorption bei niedrigen und hohen Temperaturen
- Möglichkeit zur halogenfreien Flammschutzausrüstung
- hohe Dauergebrauchstemperaturen
- gute, nahezu konstante mechanische Eigenschaften über einen breiten Temperaturbereich

Die erfindungsgemäßen Granulate und Partikelschäume eignen sich zur Verwendung zum Beispiel in der Automobilindustrie, Luftfahrtindustrie, Bauindustrie, Verpackungsindustrie, Sport- und Freizeitindustrie, im Transportwegen, im Konstruktionswesen, im Leicht- und/oder Verbundbau.

Bevorzugt ist die Verwendung zum thermischen Isolieren, insbesondere in der Bauindustrie.

Erfindungsgemäße Granulate und Partikelschäume, welche Flammschutzmittel enthalten, eignen sich für Anwendungen, bei denen Flammschutzauflagen erfüllt werden müssen.

Bevorzugte Anwendungen sind:
- Automobil (z.B. Innenraumverkleidungen, Armaturenbretter, tragende Schaumstoffteile und Schaumkerne in Sandwich- und/oder Verbundwerkstoffen)
- Hochtemperaturisolierungen im Transportwesen, im Industriebereich, zum Beispiel Heißdampfleitungen, in der Haus- und Gebäudetechnik, z.B. Heißwasserboiler
- Rotorblätter in Windkraftanlagen (hier ist insbesondere die Temperaturstabilität und die Lösungsmittelresistenz für die Herstellung von Verbundwerkstoffen von Bedeutung)
- Fassadenbauteile, die hohen Temperaturen ausgesetzt werden
- Verpackungsmaterial mit Hochtemperaturbeständigkeit.

Die Erfindung wird durch die Beispiele näher erläutert ohne sie dadurch einzuschränken.

### Beispiele

### A Allgemeine Vorschriften

### a) Intensiviertes Verfahren

Vor der Verarbeitung wurden alle Polymere unter Vakuum für mindestens 4 h bei 80 °C getrocknet. Anschließend wurden der Polyester, das Polycarbonat sowie die weiteren Komponenten, wie Talkum und Flammschutzmittel enthaltende Chargen, ohne Erwärmung in einen Gleichdrallschneckenextruder (Leistritz, Schneckendurchmesser 18 mm, Schneckenlänge 40 D) gegeben. Der Extruder wurde mit einer Schneckengeschwindigkeit von 95 Umdrehungen/min betrieben. Durch den Aufbau der Schnecke wurden alle Polymere geschmolzen und weitere Zusätze wurden homogen in die Schmelze eingearbeitet. Über die Länge der Schnecke wurden die physikalischen Treibmittel, insbesondere Isopentan, dem Extruder zugegeben und mit der Schmelze vermischt oder darin gelöst. Der Gesamtdurchsatz betrug 3 kg/h.

Die gesamte Mischung wurde über eine am Auslass des Extruders installierte Eingangsdruck-kontrollierte Zahnradpumpe unter Druck gesetzt (Eingangsdruck 140 bar), um durch ein Bypass-Ventil und eine Austrittsdüse zum Granulieren des Materials (Düsendurchmesser 0,75 mm, eine Düsenöffnung, Düsentemperatur ungefähr 300 °C) zu passieren. Die Temperatur der Schmelze vor dem Granulieren lag, abhängig von dem eingesetzten Material, zwischen 250 und 280 °C. Das Material wurde unter Wasserdruck (12 bar) bei relativ niedrigen Wassertemperaturen (ungefähr 70 °C) granuliert, um vorzeitiges Aufschäumen zu vermeiden. Der resultierende Druck der Schmelze an der Austrittsdüse betrug je nach eingesetztem Material 180 bis 300 bar. Die erhaltene mittlere Teilchengröße des expandierbaren Granulats lag bei ungefähr 1,25 mm.

Nach diesem Verfahren wurden die Beispiele 1 bis 12 durchgeführt.

### b) Mischerverfahren

Vor der Verarbeitung wurden alle Polymere unter Vakuum für mindestens 4 h bei 80 °C getrocknet. Anschließend wurden der Polyester, das Polycarbonat sowie die weiteren Komponenten, wie Talkum und Flammschutzmittel enthaltende Chargen, ohne Erwärmung in einen Gleichdrallschneckenextruder (Leistritz, Schneckendurchmesser 18 mm, Schneckenlänge 40 D) gegeben. Der Extruder wurde mit einer Schneckengeschwindigkeit von etwa 100 Umdrehungen/min betrieben. Durch den Aufbau der Schnecke wurden alle Polymere geschmolzen und weitere Zusätze wurden homogen in die Schmelze eingearbeitet. Anschließend wurde die Schmelze durch eine Folge von statischen Mischern und Wärmeaustauschern geleitet und das oder die physikalischen Treibmittel, insbesondere Isopentan, im ersten statischen Mischer zugegeben. Durch den Mischeraufbau wurden die physikalischen Treibmittel in der Schmelze gelöst und die Mischung heruntergekühlt. Der Gesamtdurchsatz betrug 3 kg/h.

Die gesamte Mischung wurde über eine am Auslass des Extruders installierte Eingangsdruck-kontrollierte Zahnradpumpe unter Druck gesetzt (Eingangsdruck 140 bar), um durch ein Bypass-Ventil und eine Austrittsdüse zum Granulieren des Materials (Düsendurchmesser 0,75 mm, eine Düsenöffnung, Düsentemperatur ungefähr 280 °C) zu passieren. Die Temperatur der Schmelze vor dem Granulieren lag, abhängig von dem eingesetzten Material, zwischen 250 und 280 °C. Das Material wurde unter Wasserdruck (12 bar) bei relativ niedrigen Wassertemperaturen (ungefähr 70 °C) granuliert, um vorzeitiges Aufschäumen zu vermeiden. Der resultierende Druck der Schmelze an der Austrittsdüse betrug je nach eingesetztem Material 180 bis 300 bar. Die erhaltene mittlere Teilchengröße des expandierbaren Granulats lag bei ungefähr 1,25 mm.

Nach diesem Verfahren wurden die Beispiele 13 und 14 durchgeführt.
- B: Eingesetzte Materialien
- Komponente A:: Polycarbonat auf Basis von Bisphenol A (Makrolon^{®} 2800, Bayer Material Science AG, Leverkusen)
- Komponente B:: Polybutylenterephthalat (Ultradur^{®} 4520, BASF SE, Ludwigshafen)
- Komponente C:: Polyethylenterephthalat (Invista 1101, Invista S.'à.r.l., Wichita)
- Komponente D:: Polymilchsäure (PLA 8051D, Natureworks LLC, Minnetonka, USA)
- Komponente E:: PBST (Ecoflex^{®} FBX 7011, BASF SE, Ludwigshafen)
- Komponente F:: Treibmittel: Isopentan (Reinheit 95 %, Haltermann Products GmbH, Speyer)
- Komponente G:: Nukleierungsmittel: Talk (IT Extra, Mondo Mineralis, Amsterdam)
- Komponente H:: Aluminiumdiethylphosphinat (Exolit^{®} OP 1230, Clariant, Muttenz)
- Komponente I:: Flammschutzmittel Triphenylphosphat (Disflamol^{®} TP [2] Lanxess AG, Leverkusen)

### Beispiel 1

79,2 Gew.-Teile Polycarbonat (Makrolon^{®} 2800) wurden zusammen mit 19,8 Gew.-Teilen Polybutylenterephthalat (Ultradur^{®} 4520) geschmolzen und im Doppelschneckenextruder mit 1 Gew.-Teil Talk (IT Extra) als Nukleierungsmittel versetzt. Die Polymerschmelze wurde anschließend mit 2,5 Gew.-Teilen (bezogen auf 100 Gew.-Teile der Polymer-Additiv-Mischung) Isopentan beladen und dann in dem Extruder homogenisiert. Nach der Homogenisierung wurde die Polymerschmelze durch eine geheizte Lochplatte extrudiert. Der Polymerstrang wurde durch Unterwassergranulierung zu einem mit Treibmittel beladenem Granulat mit einer engen Teilchengrößenverteilung granuliert. Die mit Treibmittel beladenen Perlen des Granulats weisen eine Dichte von 500 bis 600 g/l auf.

Das treibmittelhaltige Granulat wurde in einem EPS-Vorschäumer bei einem Druck von 1,5 bis 2,0 bar zu Schaumperlen mit der in Tabelle 1 angegebenen Schüttdichte von 182 g/l expandiert. Das Verpressen erfolgte in einem EPP-Formteilautomaten bei einem Überdruck von 1,6 bis 2,4 bar.

Analog wurden die Formteile der Beispiele 2 bis 5 hergestellt, deren Zusammensetzung und Schüttdichte in der Tabelle 1 aufgeführt sind.

**Tabelle 1**

| | Zusammensetzung der expandierbaren thermoplastischen Mischungen (Gewichtsteile) | | | | |
|---|---|---|---|---|---|
| | Bsp. 1 | Bsp. 2 | Bsp. 3 | Bsp. 4 | Bsp. 5 nicht erfindungsgemäß |
| PC (Makrolon 2800) | 79,2 | 79,2 | 79,2 | 59,4 | 100 |
| PBT (Ultradur 4520) | 19,8 | 19,8 | 19,8 | 39,6 | - |
| Talk | 1,0 | 1,0 | 1,0 | 1,0 | 1,0 |
| Treibmittelgehalt (zudosiert) | 2,5 | 4,5 | 6,0 | 4,5 | 5,0 |
| Glasübergangstemperatur in °C | 123 | 118 | 119 | 110 | 132 |
| Schmelztemperatur(en) in °C | 221 213 | 210 218 | 213, 220 | 211 218 | 218 |
| Gesamtschmelzenthalpie in J/g | 13 | 9 | 6 | 20 | 2 |
| Schüttdichte des Schaums in g/l | 182 | 18 | 41 | 134 | 85 |

### Beispiel 6

94,05 Gew.-Teile Polycarbonat (Makrolon^{®} 2800) wurden zusammen mit 4,95 Gew.-Teilen Polyethylenterephthalat (Invista 1101) geschmolzen und im Doppelschneckenextruder mit 1 Gew.-Teil Talk (IT Extra) als Nukleierungsmittel versetzt. Die Polymerschmelze wurde anschließend mit 4,5 Gew.-Teilen (bezogen auf 100 Gew.-Teile der Polymer-Additiv-Mischung) Isopentan beladen und dann in dem Extruder homogenisiert. Nach der Homogenisierung wurde die Polymerschmelze durch eine geheizte Lochplatte extrudiert. Der Polymerstrang wurde durch Unterwassergranulierung zu einem mit Treibmittel beladenem Granulat mit einer engen Teilchengrößenverteilung granuliert. Die mit Treibmittel beladenen Perlen des Granulats wiesen eine Dichte von 550-650 g/l auf.

### Beispiele 7 bis 9

Expandierbare Granulate mit den in Tabelle 2 angegebenen Zusammensetzungen wurden analog zu Beispiel 6 hergestellt. Die treibmittelhaltigen Granulate wurden in einem EPS-Vorschäumer bei einem Druck von 1,7 bis 2,0 bar zu Schaumperlen mit den in Tabelle 2 angegebenen Schüttdichten expandiert. Das Verpressen erfolgte in einem EPP-Formteilautomaten bei einem Überdruck von 1,6 bis 2,4 bar.

**Tabelle 2**

| | Zusammensetzung der expandierbaren thermoplastischen Mischungen (Gewichtsteile) | | | |
|---|---|---|---|---|
| | Bsp. 6 | Bsp. 7 | Bsp. 8* | Bsp. 9* |
| PC (Makrolon 2800) | 94,05 | 79,2 | 79,2 | 89,1 |
| PET (Invista 1101) | 4,95 | 19,8 | - | - |
| PLA (8051 D) | - | - | 19,8 | - |
| PBST (Ecoflex FBX 7011) | - | - | - | 9,9 |
| Talk | 1,0 | 1,0 | 1,0 | 1,0 |
| Treibmittelgehalt (zudosiert) | 4,5 | 4,5 | 4,5 | 4,5 |
| Glasübergangstemperatur in °C | 143 | 139 | 56 | 114 |
| Schmelztemperatur(en) in °C | 253 | 251 | 150 | 121, 137 |
| Gesamtschmelzenthalpie in J/g | 0,5 | 6 | 7 | 7 |
| Schüttdichte (g/l) | 71 | 55 | 78 | 39 |

| | | | | |
|---|---|---|---|---|
| * nicht erfindungsgemäß | | | | |

### Beispiel 10

78,4 Gew.-Teile Polycarbonat (Makrolon^{®} 2800) wurden zusammen mit 19,8 Gew.-Teilen Polybutylenterephthalat (Ultradur^{®} 4520) geschmolzen und im Doppelschneckenextruder mit 1 Gew.-Teil Talk (IT Extra) als Nukleierungsmittel und 1 Gew.-Teil Aluminiumdiethylphosphinat (Exolit^{®} OP 1230 in Polycarbonat-Masterbatch) als Brandschutzmittel versetzt. Die Polymerschmelze wurde anschließend mit 4,5 Gew.-Teilen (bezogen auf 100 Gew.-Teile der Polymer-Additiv-Mischung) Isopentan beladen und dann in dem Extruder homogenisiert. Nach der Homogenisierung wurde die Polymerschmelze durch eine geheizte Lochplatte extrudiert. Der Polymerstrang wurde durch Unterwassergranulierung zu einem mit Treibmittel beladenem Granulat mit einer engen Teilchengrößenverteilung granuliert. Die mit Treibmittel beladenen Perlen des Granulats wiesen eine Dichte von 500-600 g/l auf.

Das treibmittelhaltige Granulat wurde in einem EPS-Vorschäumer bei einem Druck von 1,7 bis 2,0 bar zu Schaumperlen mit einer Dichte von 18 bis 25 g/l expandiert. Das Verpressen erfolgte in einem EPP-Formteilautomaten bei einem Überdruck von 1,6 bis 2,4 bar.

Zusammensetzung und Brandschutzeigenschaften sind in Tabelle 3 wiedergegeben.

### Beispiel 11

76,9 Gew.-Teile Polycarbonat (Makrolon^{®} 2800) wurden zusammen mit 19,8 Gew.-Teilen Polybutylenterephthalat (Ultradur^{®} 4520) geschmolzen und im Doppelschneckenextruder mit 1 Gew.-Teil Talk (IT Extra) als Nukleierungsmittel und 3 Gew.-Teilen Triphenylphosphat (Disflamol^{®} TP in Polycarbonat-Masterbatch) als Brandschutzmittel versetzt. Die Polymerschmelze wurde anschließend mit 4,5 Gew.-Teilen (bezogen auf 100 Gew.-Teile der Polymer-Additiv-Mischung) Isopentan beladen und dann in dem Extruder homogenisiert. Nach der Homogenisierung wurde die Polymerschmelze durch eine geheizte Lochplatte extrudiert. Der Polymerstrang wurde durch Unterwassergranulierung zu einem mit Treibmittel beladenem Granulat mit einer engen Teilchengrößenverteilung granuliert. Die mit Treibmittel beladenen Perlen des Granulats wiesen eine Dichte von 500 bis 600 g/l auf.

Das treibmittelhaltige Granulat wurde in einem EPS-Vorschäumer bei einem Druck von 0,25 bis 0,7 bar zu Schaumperlen mit einer Dichte von 18 bis 25 g/l expandiert. Das Verpressen erfolgte in einem EPP-Formteilautomaten bei einem Überdruck von 1,6 bis 2,4 bar.

Zusammensetzung und Brandschutzeigenschaften sind in Tabelle 3 wiedergegeben.

**Tabelle 3**

| | Zusammensetzung der expandierbaren thermoplastischen Mischungen (Gewichtsteile) | | |
|---|---|---|---|
| | Bsp. 1 | Bsp. 10 | Bsp. 11 |
| PC (Makrolon 2800) | 79,2 | 78,4 | 76,9 |
| PBT (Ultradur 4520) | 19,8 | 19,6 | 19,2 |
| Exolit OP 1230 | - | 1,0 | - |
| TPP (Disflamol) | - | - | 3,0 |
| Talk | 1,0 | 1,0 | 1,0 |
| Glasübergangstemperatur in °C | 118 | 114 | 115 |
| Schmelztemperatur(en) in °C | 210 218 | 206 | 219 |
| Gesamtschmelzenthalpie in J/g | 9 | 2 | 11 |
| Treibmittelgehalt (zudosiert) | 4,5 | 4,5 | 4,5 |
| B2-Brandtest der geformten Probe | nicht selbstverlöschend | selbstverlöschend | selbstverlöschend |

### Beispiel 13

79,2 Gew.-Teile Polycarbonat (Makrolon^{®} 2800) wurden zusammen mit 19,8 Gew.-Teilen Polybutylenterephthalat (Ultradur^{®} 4520) geschmolzen und im Doppelschneckenextruder mit 1 Gew.-Teil Talk (IT Extra) als Nukleierungsmittel versetzt. Anschließend wurden 2,5 Gew.-Teile (bezogen auf 100 Gew.-Teile der Polymer-Additiv-Mischung) Isopentan zudosiert und über statische Mischer homogen in die Schmelze eingemischt. Nach der Kühlung bzw. Homogenisierung der Polymerschmelze in statischen Mischern und Wärmetauschern wurde die Schmelze über eine Zahnradpumpe durch eine geheizte Lochplatte extrudiert. Der Polymerstrang wurde durch Unterwassergranulierung zu einem mit Treibmittel beladenem Granulat mit einer engen Teilchengrößenverteilung granuliert. Die mit Treibmittel beladenen Perlen des Granulats weisen eine Dichte von 500 bis 600 g/l auf.

Das treibmittelhaltige Granulat wurde in einem EPS-Vorschäumer bei einem Druck von 1,5 bis 2,0 bar zu Schaumperlen mit der in Tabelle 1 angegebenen Schüttdichte von 182 g/l expandiert. Das Verpressen erfolgte in einem EPP-Formteilautomaten bei einem Überdruck von 1,6 bis 2,4 bar.

Analog wurden die Formteile der Beispiele 14 bis 17 hergestellt, deren Zusammensetzung und Schüttdichte in der Tabelle 4 aufgeführt sind.

**Tabelle 4**

| | Zusammensetzung der expandierbaren thermoplastischen Mischungen (Gewichtsteile) | | | |
|---|---|---|---|---|
| | Bsp. 14 | Bsp. 15 | Bsp. 16 | Bsp. 17nicht erfindungsgemäß |
| PC (Makrolon 2800) | 79,2 | 79,2 | 59,4 | 100 |
| PBT (Ultradur 4520) | 19,8 | 19,8 | 39,6 | - |
| Talk | 1,0 | 1,0 | 1,0 | 1,0 |
| Treibmittelgehalt (zudosiert) | 2,5 | 4,5 | 4,5 | 5,0 |
| Glasübergangstemperatur in °C | 120 | 117 | 122 | 133 |
| Schmelztemperatur(en) in °C | 220, 212 | 216 211 | 217, 212 | 218 |
| Gesamtschmelzenthalpie in J/g | 12 | 8 | 19 | 2 |
| Schüttdichte des Schaums in g/l | 175 | 20 | 126 | 89 |

Analog wurden die Formteile der Beispiele 18 bis 20 hergestellt, deren Zusammensetzung und Brandschutzeigenschaften in der Tabelle 5 aufgeführt sind.

**Tabelle 5**

| | Zusammensetzung der expandierbaren thermoplastischen Mischungen (Gewichtsteile) | | |
|---|---|---|---|
| | Bsp. 18 | Bsp. 19 | Bsp. 20 |
| PC (Makrolon 2800) | 79,2 | 70,48 | 70,48 |
| PBT (Ultradur 4520) | 19,8 | 17,62 | 17,62 |
| Fyroflex RDP | - | 4,41 | 4,41 |
| Melapur MC25 | - | 6,61 | 6,61 |
| Talk | 0,99 | 0,88 | 0,88 |
| Treibmittelgehalt (zudosiert) | 4,5 | 4,5 | 4,5 |
| Schaumplatte Dichte (g/L) | 48 | 48 | 62 |
| Schaumplatte Dicke (mm) | 20 | 20 | 20 |
| B1-Brandtest (DIN 4102 Teil 1: 1998-05) | nicht erfüllt | erfüllt | erfüllt |

Fyroflex RDP (Supresta Netherlands B.V.): 95 - 99% : Phosphortrichlorid, Polymer mit
1,3-Benzoldiolphenylester
1-5% : Triphenylphosphat

Melapur MC25 (BASF SE, Ludwigshafen): 1,3,5 - Triazin-2,4,6 (1 H, 3H, 5H)-trion, Verbindung mit 1,3,5-Triazin-2,4,6-triamin (1:1)

## Patentansprüche

1. Verfahren zur Herstellung eines expandierbaren Granulats, enthaltend
A) eine Polymermatrix bestehend aus
A1) mindestens 55 Gew.-% Polyester (bezogen auf die Summe der Komponenten A1) und A2)) mit einer Gesamtschmelzenthalpie im Bereich von 1 bis 37,5 J/g, gegebenenfalls einer oder mehreren Schmelztemperaturen im Bereich von 130 bis 290 °C und einer oder mehreren Glasübergangstemperaturen im Bereich von 25 bis 170 °C,
wobei die Komponente A1) eine Mischung aus einem oder mehreren Polycarbonaten gewählt aus Bisphenol-A-polycarbonat (PC) und Polypropylencarbonat (PPC), und einem oder mehreren Polycarbonsäureestern, gewählt aus Polyethylenterephthalat (PET), Polypropylenterephthalat (PPT), Polybutylenterephthalat (PBT) und Copolyestern davon, und/oder Umesterungsprodukte dieser Mischung enthält; und
A2) 0 bis 45 Gew.-% (bezogen auf die Summe der Komponenten A1) und A2)) an einem oder mehreren von der Komponente A1) unterschiedlichen thermoplastischen Polymeren;
B) eine physikalische Treibmittelkomponente und
C) gegebenenfalls weitere Additive
enthaltend die folgenden Schritte:
a) Bereitstellen des Polyesters A1) und gegebenenfalls der Polymerkomponente A2) in geschmolzenem Zustand,
b) Einmischen der physikalischen Treibmittelkomponente B) und gegebenenfalls von einem oder mehreren Additiven C) in die Schmelze,
c) Extrusion und
d) Granulieren der treibmittelhaltigen Schmelze unter Wasser unter erhöhtem Druck von 1 bis 20 bar.

2. Verfahren gemäß Anspruch 1, wobei die Polymermatrix A) aus der Polyesterkomponente A1) besteht.

3. Verfahren gemäß einem der Ansprüche 1 oder 2, wobei die Polymermatrix A) des expandierbaren Granulats 0,1 bis 20 Gew.-% bezogen auf die Summe der Komponenten A1) und A2) an einem oder mehreren thermoplastischen Polymeren A2) enthält.

4. Verfahren gemäß Anspruch 3, wobei das expandierbare Granulat als Komponente A2) ein oder mehrere Styrolpolymere und/oder deren Blends mit einem oder mehreren Polyphenylenethern enthält.

5. Verfahren gemäß einem der Ansprüche 1 bis 4, wobei die Mischung der Komponente A1) gewählt ist aus PC/PET, PC/PPT, PC/PBT, PPC/PET, PPC/PPT, PPC/PBT und Umesterungsprodukten davon.

6. Verfahren gemäß einem der Ansprüche 1 bis 5, wobei als Treibmittelkomponente B) ein oder mehrere physikalische Treibmittel, gewählt aus aliphatischen Kohlenwasserstoffen mit 2 bis 7 C-Atomen, Alkoholen, Ethern, Carbonylverbindungen, halogenierten Kohlenwasserstoffen und CO₂ eingesetzt werden.

7. Verfahren gemäß einem der Ansprüche 1 bis 6, wobei das expandierbare Granulat 0,1 bis 10 Gew.-%, bezogen auf die Summe der Komponenten A) und B), an einem oder mehreren physikalischen organischen Treibmitteln enthält.

8. Verfahren gemäß einem der Ansprüche 1 bis 7, wobei das expandierbare Granulat als Additive C) 0,1 bis 40 Gew.-% (bezogen auf die Summe der Komponenten A1), B) und C)) an einer oder mehreren Verbindungen aus der Gruppe der Stabilisatoren, Oxidationsverzögerern, Mittel gegen Wärmezersetzung und Zersetzung durch ultraviolettes Licht, Gleit- und Entformungsmittel, Farbstoffe, Pigmente, Keimbildungsmittel. Weichmacher, Flammschutzmittel und Füllstoffe enthält.

9. Verfahren gemäß Anspruch 8, wobei das expandierbare Granulat ein oder mehrere Flammschutzmittel aus der Gruppe Triphenylphosphat und Aluminiumdiethylphosphinat enthält.

10. Expandierbares Granulat, erhältlich durch das Verfahren gemäß einem der Ansprüche 1 bis 9.

11. Polyester-Partikelschaum, erhältlich durch Vorschäumen eines expandierbaren Granulats gemäß Anspruch 10.

12. Partikelschaum gemäß Anspruch 11 mit einer Dichte im Bereich von 10 bis 300 g/l, bevorzugt 20 bis 200 g/l.

13. Schaumformteil, erhältlich durch Expansion und Verpressen des Polyester-Partikelschaums gemäß Anspruch 11 oder 12.

14. Verwendung eines Partikelschaums gemäß Anspruch 11 oder 12 in der Automobilindustrie, Luftfahrtindustrie, Bauindustrie, Verpackungsindustrie, Sport- und Freizeitindustrie, im Transportwesen, im Konstruktionswesen, im Leichtbau und/oder im Verbundbau.

15. Verwendung gemäß Anspruch 14 zur thermischen Isolierung.

16. Verwendung gemäß Anspruch 14 oder 15, wobei der Partikelschaum ein Brandschutzmittel enthält, für Anwendungen bei denen Brandschutzauflagen erfüllt werden müssen.

## Claims

1. A process for producing an expandable pelletized material comprising
A) a polymer matrix composed of
A1) at least 55% by weight of polyester (based on the entirety of components A1) and A2)) with a total enthalpy of fusion in the range from 1 to 37.5 J/g, optionally with one or more melting points in the range from 130 to 290°C and with one or more glass transition temperatures in the range from 25 to 170°C,
where component A1) comprises a mixture made of one or more polycarbonates selected from bisphenol A polycarbonate (PC) and polypropylene carbonate (PPC), and one or more polycarboxylic esters selected from polyethylene terephthalate (PET), polypropylene terephthalate (PPT), polybutylene terephthalate (PBT), and copolyesters thereof, and/or comprises transesterification products of said mixture; and
A2) from 0 to 45% by weight (based on the entirety of components A1) and A2)) of one or more thermoplastic polymers different from component A1);
B) a physical blowing agent component, and
C) optionally further additives,
comprising the following steps:
a) provision of the polyester A1) and optionally of polymer component A2) in a molten state,
b) mixing to incorporate physical blowing agent component B) and optionally one or more additives C) into the melt,
c) extrusion, and
d) underwater pelletization of the melt containing blowing agent at elevated pressure of from 1 to 20 bar.

2. The process according to claim 1, where the polymer matrix A) consists of polyester component A1).

3. The process according to either of claims 1 and 2, where the polymer matrix A) of the expandable pelletized material comprises, based on the entirety of components A1) and A2), from 0.1 to 20% by weight of one or more thermoplastic polymers A2).

4. The process according to claim 3, where the expandable pelletized material comprises, as component A2), one or more styrene polymers and/or blends of these with one or more polyphenylene ethers.

5. The process according to any of claims 1 to 4, where the mixture of component A1) has been selected from PC/PET, PC/PPT, PC/PBT, PPC/PET, PPC/PPT, PPC/PBT, and transesterification products thereof.

6. The process according to any of claims 1 to 5, where, as blowing agent component B), one or more physical blowing agents selected from aliphatic hydrocarbons having from 2 to 7 carbon atoms, alcohols, ethers, carbonyl compounds, halogenated hydrocarbons, and CO₂ are used.

7. The process according to any of claims 1 to 6, where the expandable pelletized material comprises, based on the entirety of components A) and B), from 0.1 to 10% by weight of one or more organic physical blowing agents.

8. The process according to any of claims 1 to 7, where the expandable pelletized material comprises, as additives C), from 0.1 to 40% by weight (based on the entirety of components A1), B), and C)), of one or more compounds from the group of the stabilizers, oxidation retarders, agents to counteract decomposition by heat and decomposition by ultraviolet light, lubricants and mold-release agents, dyes, pigments, nucleating agents, plasticizers, flame retardants, and fillers.

9. The process according to claim 8, where the expandable pelletized material comprises one or more flame retardants from the group of triphenyl phosphate and aluminum diethylphosphinate.

10. An expandable pelletized material, obtainable via the process according to any of claims 1 to 9.

11. A moldable polyester foam obtainable via prefoaming of an expandable pelletized material according to claim 10.

12. The moldable foam according to claim 11 with a density in the range from 10 to 300 g/l, preferably from 20 to 200 g/l.

13. A foam molding obtainable via expansion and pressing of the moldable polyester foam according to claim 11 or 12.

14. The use of a moldable foam according to claim 11 or 12 in the automobile industry, airline industry, construction industry, packaging industry, sports and leisure industry, in transport, in engineering, in lightweight construction, and/or in composite construction.

15. The use according to claim 14 for thermal insulation.

16. The use according to claim 14 or 15, where the moldable foam comprises a flame retardant, for applications which require compliance with fire-protection rules.

## Revendications

1. Procédé de fabrication d'un granulat expansible, contenant :
A) une matrice polymère, constituée par :
A1) au moins 55 % en poids d'un polyester (par rapport à la somme des composants A1) et A2)) ayant une enthalpie de fusion totale dans la plage allant de 1 à 37,5 J/g, éventuellement une ou plusieurs températures de fusion dans la plage allant de 130 à 290 °C, et une ou plusieurs températures de transition vitreuse dans la plage allant de 25 à 170 °C,
le composant A1) contenant un mélange d'un ou de plusieurs polycarbonates choisis parmi le polycarbonate de bisphénol A (PC) et le polycarbonate de propylène (PPC), et un ou plusieurs esters d'acides polycarboxyliques, choisis parmi le polyéthylène téréphtalate (PET), le polypropylène téréphtalate (PPT), le polybutylène téréphtalate (PBT) et leurs copolyesters, et/ou les produits de transestérification de ce mélange ; et
A2) 0 à 45 % en poids (par rapport à la somme des composants A1) et A2)) d'un ou de plusieurs polymères thermoplastiques différents du composant A1) ;
B) un composant agent gonflant physique, et
C) éventuellement d'autres additifs,
contenant les étapes suivantes :
a) la préparation du polyester A1) et éventuellement du composant polymère A2) à l'état fondu,
b) l'incorporation du composant agent gonflant physique B) et éventuellement d'un ou de plusieurs additifs C) dans la masse fondue,
c) l'extrusion et
d) la granulation de la masse fondue contenant un agent gonflant sous l'eau sous une pression élevée de 1 à 20 bar.

2. Procédé selon la revendication 1, dans lequel la matrice polymère A) est constituée du composant polyester A1).

3. Procédé selon l'une quelconque des revendications 1 ou 2, dans lequel la matrice polymère A) du granulat expansible contient 0,1 à 20 % en poids, par rapport à la somme des composants A1) et A2), d'un ou de plusieurs polymères thermoplastiques A2).

4. Procédé selon la revendication 3, dans lequel le granulat expansible contient en tant que composant A2) un ou plusieurs polymères de styrène et/ou leur mélange avec un ou plusieurs éthers de polyphénylène.

5. Procédé selon l'une quelconque des revendications 1 à 4, dans lequel le mélange du composant A1) est choisi parmi PC/PET, PC/PPT, PC/PBT, PPC/PET, PPC/PPT, PPC/PBT et leurs produits de transestérification.

6. Procédé selon l'une quelconque des revendications 1 à 5, dans lequel un ou plusieurs agents gonflants physiques choisis parmi les hydrocarbures aliphatiques de 2 à 7 atomes C, les alcools, les éthers, les composés de carbonyle, les hydrocarbures halogénés et le CO₂ sont utilisés en tant que composant agent gonflant B).

7. Procédé selon l'une quelconque des revendications 1 à 6, dans lequel le granulat expansible contient 0,1 à 10 % en poids, par rapport à la somme des composants A) et B) d'un ou de plusieurs agents gonflants organiques physiques.

8. Procédé selon l'une quelconque des revendications 1 à 7, dans lequel le granulat expansible contient en tant qu'additifs C) 0,1 à 40 % en poids (par rapport à la somme des composants A1), B) et C)) d'un ou de plusieurs composés du groupe constitué par les stabilisateurs, les ralentisseurs d'oxydation, les agents contre la décomposition thermique et la décomposition par lumière ultraviolette, les agents lubrifiants et démoulants, les colorants, les pigments, les agents de nucléation, les plastifiants, les agents ignifuges et les charges.

9. Procédé selon la revendication 8, dans lequel le granula expansible contient un ou plusieurs agents ignifuges du groupe constitué par le triphénylphosphate et le diéthylphosphinate d'aluminium.

10. Granulat expansible, pouvant être obtenu par le procédé selon l'une quelconque des revendications 1 à 9.

11. Mousse particulaire de polyester, pouvant être obtenue par prémoussage d'un granulat expansible selon la revendication 10.

12. Mousse particulaire selon la revendication 11, ayant une densité dans la plage allant de 10 à 300 g/l, de préférence de 20 à 200 g/l.

13. Pièce moulée en mousse, pouvant être obtenue par expansion et compression de la mousse particulaire de polyester selon la revendication 11 ou 12.

14. Utilisation d'une mousse particulaire selon la revendication 11 ou 12 dans l'industrie automobile, l'industrie aéronautique, dans le bâtiment, dans l'industrie de l'emballage, dans l'industrie du sport et des loisirs, dans le secteur des transports, dans le secteur de la construction, dans la construction légère et/ou dans la construction mixte.

15. Utilisation selon la revendication 14 pour l'isolation thermique.

16. Utilisation selon la revendication 14 ou 15, dans laquelle la mousse particulaire contient un agent de protection contre l'incendie, pour des applications pour lesquelles des règles de protection contre l'incendie doivent être respectées.
